# EUROPEAN PATENT SPECIFICATION

(11) **EP 3 514 041 B1**
(45) Date of publication and mention of the grant of the patent: **15.09.2021**
(21) Application number: 19150511.4
(22) Date of filing: 07.01.2019
(51) Int. Cl.: B62D 25/16

(54) **DEVICE FOR THE ATTACHMENT OF A MUDGUARD TO THE FRAME**
VORRICHTUNG ZUM ANBRINGEN EINES KOTFLÜGELS AN DEN RAHMEN
DISPOSITIF DE FIXATION D'UN GARDE-BOUE SUR LE CADRE

(30) Priority: 15.01.2018 IT 201800000907
(43) Date of publication of application: 24.07.2019
(73) Proprietor: DOMAR S.p.A., 75100 Matera (IT)
(72) Inventor: LORUSSO, Antonio, 75100 MATERA (IT)
(74) Representative: Conversano, Gabriele

(56) References cited:
- EP-A1- 1 619 108
- EP-A1- 1 964 755
- EP-A1- 2 193 981
- WO-A1-2010/123414
- US-B1- 9 802 652

## Description

The present invention relates to a system for fastening a fender to a frame of a vehicle, and in particular to a frame of a truck, articulated lorry and other heavy lorries, which allows a safe and rapid fastening at the same time. More in particular, the present invention relates to a fastening system of a fender to a frame of a truck, which is provided with a rapid clutch safety lock (clip) .

### State of the art

At the state of the art there are known various embodiments of devices for fastening fenders to the frame of trucks and similar vehicles.

In WO2010/123414 is disclosed a system for the attachment of a mudguard to the frame of a vehicle comprising a locking device configured to be partially inserted inside a tube integral with the vehicle frame. A similar solution is disclosed in EP1619108, while document US9802652 discloses a removable mud flap assembly.

In cited examples and in other embodiments known to the art, typically, fenders are provided with a cylindrical housing configured to house a tube integral to the frame. The fender axial sliding to the tube is limited by means of locking means. These devices are engaged in the tube and housing of the fender and fasten the relative axial position of the two pieces. In particular, the devices provided with snap fastening means (snap hooks and the like) are called rapid locking/unlocking devices.

The rapid locking/unlocking devices currently on the market have limits, since after vibrations and/or impacts of remarkable intensity, which frequently occur in running vehicles, it often occurs that the snap device goes out from the tube. Therefore, following vibrations can cause the fender going out from the tube integral to the vehicle. But, other safer locking devices require more installation time than the rapid locking/unlocking devices, and so, they have limits in the fender first installation step and following maintenance.

### Aim of the invention

Therefore, aim of the present invention is to provide a fastening system of a fender to a frame of a truck, which overcomes the limits linked to the devices known at the state of the art. More in particular, the present invention provides a rapid locking system of a fender to a frame of a vehicle, whose functioning cannot be compromised by impacts and vibrations. Yet, the present invention provides a rapid coupling/uncoupling system provided with a safety lock (clip) to be mounted rapidly, also without tools, and which can guarantee that the fender is anchored to the tube integral to the frame of the vehicle also in case of impacts.

### Brief description of the invention

The invention reaches the prefixed aims since it is a system for fastening a fender to a frame of a vehicle, comprising a locking device (1) comprising and first (11) and a second portion (12) separated by an abutment or stop element (13), said first portion (11) being configured to be introduced inside the fender (30, 31) and being provided with at least a prong or wedge-shaped hook (112), said second portion (12) being configured to be introduced inside a tube (2) integral to the frame of the vehicle, and comprising at least a shaped hole (22) on its own outer surface,
said second portion (12) comprising at least a snap hook (122), configured to engage said hole (2), and at least a hole (123) in such a position that, when the locking device (1) in introduced inside the tube (2), said hole (123) is at said hole (22) provided on said tube (2), characterized in that said system further comprises a safety clip (40, 41) configured to engage said holes (123, 22) provided on the device (1) and on the tube (2), thus fastening the axial sliding.

### Detailed description

The invention will be described in detail in the following with reference to the appended figures 1 to 6. In figure 1 it is shown an axonometric view of a preferred embodiment of the device, shown in side view in figure 2; in figure 3 it is shown an exploded view of the device, the tube and the first embodiment of the safety clip, shown assembled with the fender in figure 4; in figure 5 it is shown an exploded view of the device, the tube and a second embodiment of the safety clip, shown assembled with the fender in figure 6.

The system according to the invention comprises a locking device (1) and a safety clip (40, 41).

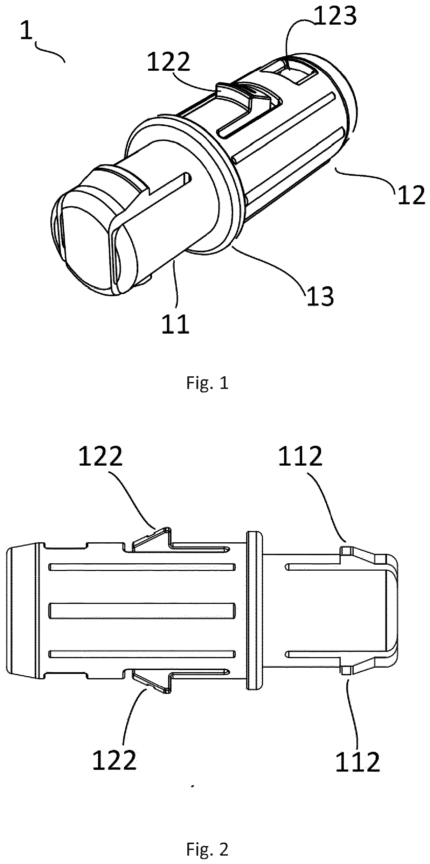

With reference to the appended figure 1, the device (1) comprises a first (11) and a second (12) portion, separated by an abutment or stop element (13) .

The first portion (11) of the device (1) is substantially cylindrically shaped, is configured to be introduced inside the fender (30, 31) and is provided with at least a prong or wedge-shaped hook (112) which fastens the device to a respective fastening means provided on the fender (30, 31). Preferably, there are provided two wedge-shaped hooks (112), arranged in diametrically opposed positions to each other and configured to engage respective fastening means provided on the fender. The provision of two prongs (112) allows to improve remarkably the fastening system resistance to vibrations and impacts, since a temporary respective displacement of the device (1) to the fender (30, 31), as caused by impacts or vibrations, cannot tend to uncouple the two opposed prongs at the same time.

The second portion (12) of the device (1), also substantially cylindrically shaped, is configured to be introduced inside the tube (2) integral to the frame of the vehicle. This portion comprises a series of longitudinal ribs (121) and at least a snap hook (122) configured to engage a suitable hole (22) provided on the tube (2). Preferably there are provided two snap hooks (122) arranged in diametrically opposed positions to each other, configured to engage respective shaped holes (22) provided on the tube (2). The considerations made for the prongs (122) concerning the provision of the two diametrically opposed hooks are valid also for snap hooks (122). On said second portion (12) it is also provided at least a hole (123), in such a position that, when the locking device (1) is introduced inside the tube (2) the hole (123) is at the hole (22) provided outside the tube (2). Preferably, it is provided a hole (123) at each snap hook.

Preferably, said second portion (12) of the device (1) is also provided with longitudinal ribs (121). The longitudinal ribs are configured to go inside the tube (2) integral to the frame, with a little interference, in order to limit the coupling clearance between tube and device.

It is to be considered that the provision of the ribs (121) is more efficient at limiting the clearance between tube and device than the realization of a greater diameter of the device. In fact, since productions have necessarily tolerances, both the outside of the device and the inside of the tube cannot be perfectly circular and, so, their diameters have to be necessarily conceived for a coupling with clearance, otherwise there would be annoying problems in assembling step. On the contrary, the ribs (121) can have a little interference since:
- as they have a limited surface, they provide limited friction during assembly;
- as the whole coupling surface is not affected, they can better tolerate irregularities in the shape of the tube.

The fastening system further comprises a safety clip (40, 41) provided with an elastically deformable portion (402, 412) and a cap (401, 411). Said elastically deformable portion (402, 412) is configured so that it has a wedge shape and a maximum width, at rest, greater than the one of the hole (123) provided on the locking device (1). Downstream of the wedge it is provided a section with lower width than or equal width to the one of said hole. Said elastically deformable portion is also configured so that it can be deformed elastically up to a width lower than the one of said hole (123). The cap (401, 411) of said clip (40, 41) is greater than said hole (123).

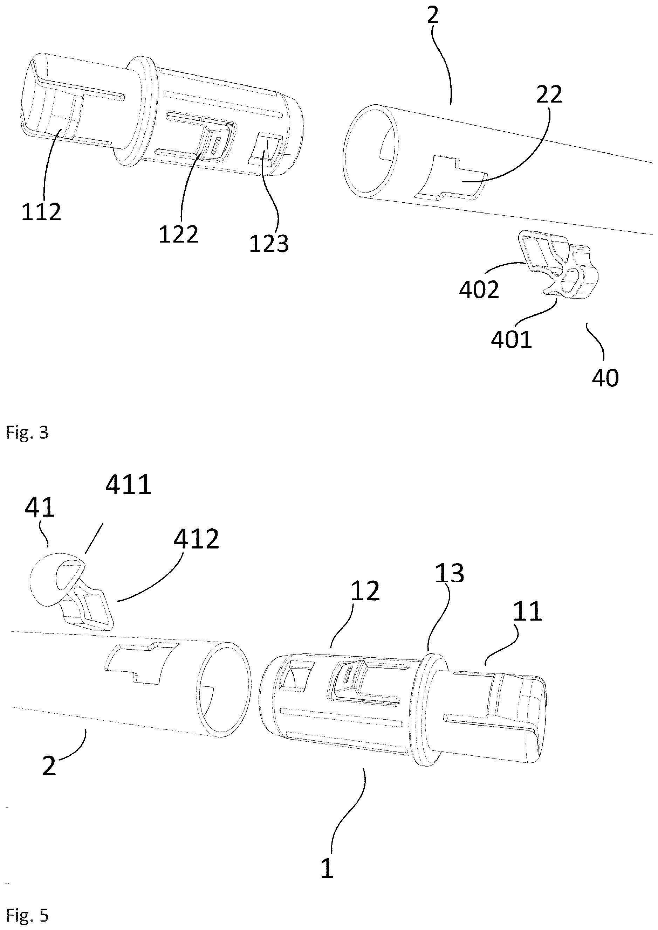

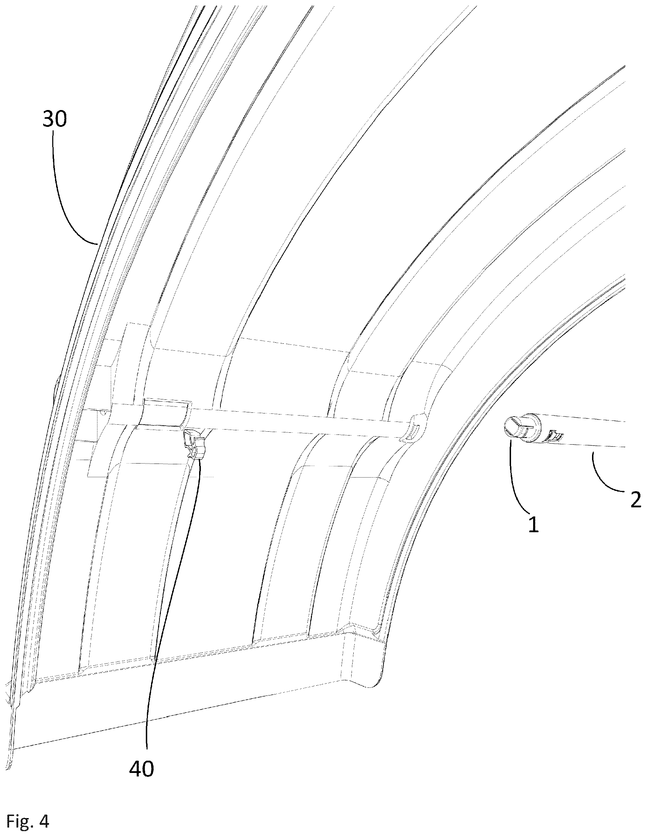

The safety clip can be realized with various geometries, but always with the just described technical features. According to a first embodiment shown in figure 3, the clip (40) can have an optimized shape to be introduced from the inner side of the fender, as it is shown in figure 4. In another embodiment shown in figure 5, the clip (41) can have an optimized shape to be coupled from the outer portion of the fender.

In order to be fastened to the system according to the present invention, the fender (30, 31) has to be provided with a cylindrical housing configured to house a tube integral to the frame, and a hole (311) configured so that it is at the hole (12) provided on the device (1) and at the hole (22) provided on the tube (2), when the device is assembled.

After describing the elements constituting the fastening system, now it is possible to describe its functioning. In order to install a fender (30, 31) it is sufficient to introduce the second portion (12) of the locking device (1) inside the tube (2) integral to the vehicle. The respective dimensions of the device (1) and the tube (2) are such that the abutment (13) has the same outer diameter as the tube (2). Therefore, the device (1) can be introduced inside the tube (2) until the abutment (13) stops its movement. So, the prong hooks (122) will engage the respective holes (22) provided on the tube.

A this point, the fender can be installed on the vehicle so that the tube (2), to which the device (1) is yet fastened, is introduced inside the suitable housing provided on the fender, and so that said first portion (11) of the device (1) is introduced inside the suitable housing provided on the fender until the abutment (13) stops its respective movement. The prongs (112) will engage the respective fastening means provided on the fender.

In this position, the hole (311) provided on the fender (30, 31), the hole (22) provided on the tube and the hole (123) provided on the device (1) are aligned. Therefore, it is possible to introduce the clip (40, 41), whose shape is such that the same will be deformed to be able to enter the three aligned holes, and it will come back in its rest shape after the wedged-shaped deformable portion has been introduced.

At this point the system is mounted, and also with impacts, vibrations or strokes the clip (40) will prevent the axial sliding of the fender to the tube and the locking device.

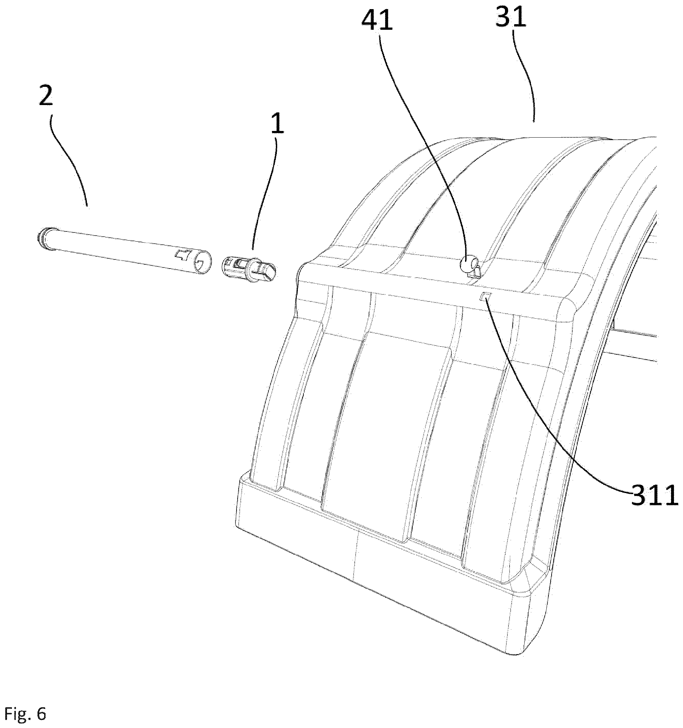

As it is shown in figures 4 and 6 the fender (30, 31) can be configured to be introduced in the tube (2) both at its inner surface and at its outer surface. Obviously, these are geometrical modifications which can be made without departing from the aims of the invention. Similarly, as it is shown, the clip (40, 41) can have various shapes of the cap (401, 411), without this modifying the functioning of the device.

In order to disassemble the fender, it is needed to extract the clip (40) and then to go on by taking out the various elements after compressing the respective snap hooks.

## Claims

1. System for fastening a fender to a frame of a vehicle, comprising a locking device (1) comprising and first (11) and a second portion (12) separated by an abutment or stop element (13),
said first portion (11) being configured to be introduced inside the fender (30, 31) and being provided with at least a prong or wedge-shaped hook (112) ,
said second portion (12) being configured to be introduced inside a tube (2) integral to the frame of the vehicle, and comprising at least a shaped hole (22) on its own outer surface,
said second portion (12) comprising at least a snap hook (122), configured to engage said hole (2), and at least a hole (123) in such a position that, when the locking device (1) in introduced inside the tube (2), said hole (123) is at said hole (22) provided on said tube (2),
**characterized in that**
said system further comprises a safety clip (40, 41) configured to engage said holes (123, 22) provided on the device (1) and on the tube (2), thus fastening the axial sliding.

2. System for fastening a fender to a frame of a vehicle according to claim 1, **characterized in that** said safety clip (40, 41) is provided with an elastically deformable portion (402, 412) and a cap (401, 411), said elastically deformable portion (402, 412) having a wedge shape and a maximum width, at rest, greater than the one of said hole (123) provided on the locking device (1), and being configured so that it can be deformed elastically up to a width lower than the one of said hole (123) .

3. System for fastening a fender to a frame of a vehicle according to claim 1 or 2, **characterized in that** said first (11) and said second portion (12) of the device are substantially cylindrically shaped.

4. System for fastening a fender to a frame of a vehicle according to any one of the preceding claims, **characterized in that** said first portion comprises two snap hooks (112), arranged in diametrically opposed positions to each other and configured to engage respective fastening means provided on the fender.

5. System for fastening a fender to a frame of a vehicle according to any one of the preceding claims, **characterized in that** said second portion comprises two snap hooks (122) arranged in diametrically opposed positions to each other, configured to engage respective holes provided on the tube (2) and a hole (123) at each snap hook.

6. System for fastening a fender to a frame of a vehicle according to any one of the preceding claims, **characterized in that** said second portion (12) of the device (1) is provided with longitudinal ribs (121), configured to go inside the tube (2) integral to the frame, with a little interference, in order to limit the coupling clearance between tube and device.

## Patentansprüche

1. System zur Befestigung eines Kotflügels an einem Rahmen eines Fahrzeugs, umfassend eine Schließvorrichtung (1) mit einem ersten (11) und einem zweiten Abschnitt (12), die durch ein Anschlag- oder Anschlagelement (13) getrennt sind, wobei der erste Abschnitt (11) derart konfiguriert ist, um in den Kotflügel (30, 31) eingeführt zu werden und mit mindestens einem zinken- oder keilförmigen Haken (112) versehen ist,
wobei der zweite Abschnitt (12) derart konfiguriert ist, um in ein Rohr (2), integral mit dem Rahmen des Fahrzeugs, eingeführt zu werden und mindestens ein geformtes Loch (22) an seiner eigenen Außenfläche umfasst,
wobei der zweite Abschnitt (12) mindestens einen Schnapphaken (122) aufweist, der derart konfiguriert ist, um mit dem Loch (2) in Eingriff zu sein, und mindestens mit einem Loch (123) in einer solchen Stellung in Eingriff zu sein dass, wenn die Schließvorrichtung (1) im Inneren des Rohrs (2) eingeführt ist, sich das Loch (123) an dem Loch (22) befindet, das an dem genannten Rohr (2) vorgesehen ist,
**dadurch gekennzeichnet, dass**
das System ferner einen Sicherheitsclip (40, 41) umfasst, der derart konfiguriert ist, um in die Löcher (123, 22) einzugreifen, die an der Vorrichtung (1) und am Rohr (2) vorgesehen sind, wodurch das axiale Gleiten befestigt wird.

2. System zur Befestigung eines Kotflügels an einem Rahmen eines Fahrzeugs nach Anspruch 1, **dadurch gekennzeichnet, dass** der Sicherheitsclip (40, 41) mit einem elastisch verformbaren Abschnitt (402, 412) und einer Kappe (401, 411) versehen ist, wobei der elastisch verformbare Teil (402, 412) eine Keilform und eine maximale Breite in der Ruhestellung aufweist, die größer als die des Lochs (123) sind, das an der Schließvorrichtung (1) vorgesehen und derart konfiguriert ist, dass es elastisch verformt werden kann, bis zu einer Breite, die geringer als die des Lochs (123) ist.

3. System zur Befestigung eines Kotflügels an einem Rahmen eines Fahrzeugs nach Anspruch 1 oder 2, **dadurch gekennzeichnet, dass** der erste (11) und zweite Abschnitt (12) der Vorrichtung im Wesentlichen zylindrisch geformt sind.

4. System zur Befestigung eines Kotflügels an einem Rahmen eines Fahrzeugs nach einem der vorhergehenden Ansprüche, **dadurch gekennzeichnet, dass** der erste Abschnitt zwei Schnapphaken (112) umfasst, die in diametral gegenüberliegenden Positionen zueinander angeordnet und derart konfiguriert sind, um in entsprechenden Befestigungsmittel einzugreifen, die am Kotflügel vorgesehen sind.

5. System zur Befestigung eines Kotflügels an einem Rahmen eines Fahrzeugs nach einem der vorhergehenden Ansprüche, **dadurch gekennzeichnet, dass** der zweite Abschnitt zwei Schnapphaken (122) umfasst, die in diametral gegenüberliegenden Positionen zueinander angeordnet und derart konfiguriert sind, um in entsprechend vorgesehene Löcher einzugreifen, die am Rohr (2) und in ein Loch (123) an jedem Schnapphaken vorgesehen sind.

6. System zur Befestigung eines Kotflügels an einem Rahmen eines Fahrzeugs nach einem der vorhergehenden Ansprüche, **dadurch gekennzeichnet, dass** der zweite Abschnitt (12) der Vorrichtung (1) mit Längsrippen (121) versehen ist, die derart konfiguriert sind, um ins Innere des integral mit dem Rahmen verbundenen Rohrs (2) mit einem gewissen Übermaß eingeführt zu sein, um das Kupplungsspiel zwischen Rohr und Gerät zu begrenzen.

## Revendications

1. Système de fixation d'un garde-boue sur un châssis de véhicule, comprenant un dispositif de verrouillage (1) comprenant une première (11) et une deuxième partie (12) séparées par un élément de butée ou d'arrêt (13),
ladite première partie (11) étant configurée pour être introduite à l'intérieur du garde-boue (30, 31) et étant pourvue d'au moins un crochet (112) en forme de dent ou de coin,
ladite deuxième partie (12) étant configurée pour être introduite à l'intérieur d'un tube (2) solidaire du châssis du véhicule, et comprenant au moins un trou conformé (22) sur sa propre surface extérieure,
ladite deuxième partie (12) comprenant au moins un crochet d'encliquetage (122), configuré pour engager ledit trou (2), et au moins un trou (123) dans une position telle que, lorsque le dispositif de verrouillage (1) est introduit à l'intérieur du tube (2), le trou (123) est au niveau du trou (22) prévu sur le tube (2),
**caractérisé en ce que**
le système comprend en outre un clip de sécurité (40, 41) configuré pour s'engager dans les trous (123, 22) prévus sur le dispositif (1) et sur le tube (2), de sorte à fixer ainsi le coulissement axial.

2. Système de fixation d'un garde-boue sur un châssis de véhicule selon la revendication 1, **caractérisé en ce que** le clip de sécurité (40, 41) est pourvu d'une partie élastiquement déformable (402, 412) et d'un capuchon (401, 411), la partie élastiquement déformable (402, 412) ayant une forme de coin et une largeur maximale, au repos, supérieure à celle du trou (123) prévu sur le dispositif de verrouillage (1), et étant configurée de manière à pouvoir être déformée élastiquement jusqu'à une largeur inférieure à celle du trou (123).

3. Système de fixation d'un garde-boue sur un châssis de véhicule selon la revendication 1 ou 2, **caractérisé en ce que** la première (11) et la deuxième partie (12) du dispositif sont de forme sensiblement cylindrique.

4. Système de fixation d'un garde-boue sur un châssis de véhicule selon l'une quelconque des revendications précédentes, **caractérisé en ce que** la première partie comprend deux crochets d'encliquetage (112), disposés dans des positions diamétralement opposées l'une à l'autre et configurés pour s'engager respectivement avec des moyens de fixation prévus sur le garde-boue.

5. Système de fixation d'un garde-boue à un châssis de véhicule selon l'une quelconque des revendications précédentes, **caractérisé en ce que** la deuxième partie comprend deux crochets d'encliquetage (122) disposés dans des positions diamétralement opposées l'une à l'autre, configurés pour s'engager dans des trous respectifs sur le tube (2) et dans un trou (123) à chaque crochet d'encliquetage.

6. Système de fixation d'un garde-boue sur un châssis de véhicule selon l'une quelconque des revendications précédentes, **caractérisé en ce que** la deuxième partie (12) du dispositif (1) est pourvue de nervures longitudinales (121), configurées pour rentrer à l'intérieur le tube (2) solidaire du châssis, avec une réduite interférence, afin de limiter le jeu d'accouplement entre tube et dispositif.
